# EUROPEAN PATENT SPECIFICATION

(11) **EP 4 162 801 B1**
(45) Date of publication and mention of the grant of the patent: **26.11.2025**
(21) Application number: 22199422.1
(22) Date of filing: 03.10.2022
(51) Int. Cl.: A21D 13/047, A21D 13/066

(54) **PROCESS FOR PRODUCING A GLUTEN-FREE DOUGH BASED ON SULPHUR WATER**
VERFAHREN ZUR HERSTELLUNG VON GLUTENFREIEM TEIG UNTER VERWENDUNG VON SCHWEFELWASSER
PROCÉDÉ DE PRODUCTION DE PÂTES SANS GLUTEN AVEC DE L'EAU COMPRENANT DU SOUFRE

(30) Priority: 08.10.2021 IT 202100025895
(43) Date of publication of application: 12.04.2023
(73) Proprietor: Futura S.r.l., 81100 Caserta (CE) (IT)
(72) Inventor: RUSSO, Giuseppe, 81100 Caserta CE (IT); BIONDI, Fabio, 81100 Caserta CE (IT); DI BONA, Salvatore, 81100 Caserta CE (IT)
(74) Representative: Perani & Partners S.p.A.

(56) References cited:
- HR-A2- P20 200 261
- RO-A2- 127 713
- US-A1- 2010 291 263

## Description

### FIELD OF THE INVENTION

The present invention relates to a process for producing a gluten-free dough.

### STATE OF THE ART

In the last decade, a need has been perceived to pay special attention to human, mental and physical health. This aim is also pursued by educating a subject to have a healthier and more balanced diet.

However, in the food sector, it is also necessary to address at the same time the issue of food intolerances, such as celiac disease, which are increasingly emerging and with a high incidence rate.

Celiac disease is a permanent gluten intolerance. Gluten is a complex of nitrogenous substances formed while mixing the flour of some cereals, such as oats, wheat, emmer, kamut, barley, rye, spelt and triticale, with water.

The March 2021 report by the Ministry of Health on food intolerances in Italy shows that these latter now occur at a frequency of 1% per year, and that out of an estimated 600,000 cases of celiac disease per year, only 225,000 are diagnosed. The Italian regions with the majority of cases of food intolerances are Lombardy, Lazio and Campania; the regions where the majority of food intolerances are diagnosed are Lombardy, Emilia-Romagna and Piedmont. Moreover, an incidence rate of 0.5% in relation to the total population is reached in relatively small regions such as Trentino, Valle d'Aosta and Sardinia.

In Europe, the trend of food intolerances on an annual basis is around 0.3% of the entire population in countries such as Great Britain, Spain and France respectively. A remarkable fact is that in Northern European countries, on the other hand, rates of around 3.0% of the total population are reached.

Nevertheless, the consumption of flour-based products is nowadays also widespread in the form of deep-frozen products, such as baked products like deep-frozen pizzas or focaccias.

### Problem of the prior art

One of the disadvantages related to gluten-free products is that they derive from naturally gluten-free flours (rice flour), but have a poorly tempting taste if compared to the corresponding traditional product made from wheat flour. For this reason, they are usually unappealing and only consumed by those who are forced to do so for health reasons.

It is known that the processes for producing gluten-free doughs involve the use of other types of flour or additives to promote the rising process, since they lack the gluten mesh. Useful additives in this regard are thickeners/stabilisers/thickening agents (xanthan gum or guar gum, which appear to damage the gut microbiome) and which, if used in large quantities, may contribute to inflammation, allergies and/or food intolerances.

It is known that commercially available deep-frozen products are usually less appealing than the traditional product because they have a less distinct taste and/or fragrance or a poorly attractive appearance. For example, traditional deep-frozen pizza is often characterised by a pale or whitish colouring that has little to do with the typical colouring of a non-deep-frozen pizza baked by traditional methods.

There is a need to find processes for producing gluten-free doughs with the aim of leading the final consumer to a healthier diet without renouncing final quality and taste; furthermore, such production processes must be functional in order to obtain products that are more appealing, also visually, to the consumer and also suitable for people with food intolerances

Patent Application HRP20200261A1 relates to leavened dough products comprising sulfur comprising thermal waters.

### SUMMARY OF THE INVENTION

A first object of the present invention is a process for producing a gluten-free dough comprising the following steps:
a) providing the following ingredients: water, flour, yeast, salt, oil;
b) adding the yeast to the water and mixing to obtain a primary mixture;
c) adding the flour to the primary mixture to obtain a homogeneous secondary mixture;
d) adding salt and oil to the homogeneous secondary mixture;
e) mixing the homogeneous secondary mixture from the previous step (d) to obtain an intermediate dough,
f) spreading out the intermediate dough on a flat surface, and forming dough balls from the spread intermediate dough;
g) letting the balls rise;
**wherein**
the water consists of sulfur water, wherein the sulfur water comprises at least one sulfur derivative selected from hydrogen sulfide and sulfate,
the step of adding the flour to the primary mixture (c) occurs in a period of time comprised between 3 and 15 seconds, preferably between 5 and 10 seconds,
wherein the step of spreading out the intermediate dough on a surface and forming dough balls from the spread intermediate dough (f) is followed by a sub-step of storing and letting the dough balls rest (f1),
wherein the sub-step of storing and letting the dough balls rest (f1) occurs at a temperature comprised between 2°C and 7°C and wrapping each single ball in films.

A gluten-free dough (not part of the claims) is obtained by the process according to the invention, wherein said gluten-free dough may be deep-frozen.

### Advantages of the invention

The present invention differs from known processes for obtaining gluten-free doughs or products because:
- it is a process for producing a gluten-free dough for which no step needs adding thickeners (cellulose derivatives, carboxymethyl cellulose), or stabilisers (sodium caseinate) or thickening agents (maize starch). This is possible thanks to the use of sulfur water. The Applicant considers that sulfur water develops sulfites, sulfur dioxide or sulfur-based inorganic salts during the production process steps a)-g). Therefore, the presence of sulfur water makes it possible to obtain alveolations in the dough comparable to those of the glutinic mesh of a traditional dough (with gluten); this ensures to obtain the characteristics of consistency, softness, colouring and fragrance sought by the consumer, and comparable to those typical of a traditional dough;
- the production process provides that the steps of: adding the flour to the primary mixture to obtain a homogeneous secondary mixture (c); mixing the homogeneous secondary mixture to obtain an intermediate dough (e); letting the dough balls rise (g) are to be carried out in a time range such as to ensure the entrapment of "air", i.e. sulfites obtained from the sulfur water, within the dough so as to obtain alveolation comparable to that of the glutinic mesh of a traditional dough or one with gluten; the process, globally considered, comprises steps that are to be carried out gently and slowly; this ensures to obtain a properly raised dough with a softness and flavour that are at all comparable to those of a product made from a traditional or gluten dough;
- the steps of the process of the invention, preferably the step of storing and letting the dough balls rest (f1), have the function of promoting an effective rising and ease of spreading out the dough being processed, despite the high level of hydration of the dough itself. Preferably, the step of storing and letting the dough balls rest (f1) ensures the entrapment of the gases mainly deriving from the sulfur water, thus providing the necessary thrust or force to effectively promote the growth of the dough being processed and thus prevent it from deflating or losing volume. Preferably, this sub-step of storing and letting the dough balls rest (f1) of the process of the invention also contributes to obtain those characteristics of softness and elasticity of the dough.

It is the combination of the presence of the sulfur water and the slow and gentle steps in the production process that allow the above-mentioned characteristics of softness, elasticity, fragrance and colouring of the gluten-free dough to be obtained.

The ultimate object of the invention is to obtain a process for producing gluten-free doughs and products that satisfy both the consumer pursuing a healthier and quality diet and the subject with food intolerances such as celiac disease.

### DESCRIPTION OF THE DRAWINGS

**Figure** 1 - Dough with gluten-free buckwheat flour.
**Figure 2** - Dough with gluten-free buckwheat flour in the form of dough balls.
**Figure 3** - Ball made from the gluten-free buckwheat flour dough wrapped in a film.
**Figures 4** and **5** - Detail of the gluten-free buckwheat flour ball wrapped in a film, showing the presence of air bubbles formed during storage and rest of the dough ball.
**Figure 6** - Dough of the process of the invention spread out and shaped (circle shape), with the desired toppings.
**Figure 7** - Dough of the process of the invention baked in the oven.
**Figures 8** and **9** - Finished product obtained by the process of the invention.
**Figure 10** - Dough obtained by the known process of Example 3 (step 3) using gluten-free buckwheat flour.
**Figure 11** **-** Dough obtained by the known process of Example 3 (step 4) using gluten-free buckwheat flour.
**Figure 12** - Dough obtained by the known process of Example 3 (step 5) using gluten-free buckwheat flour.
**Figure 13** - Circle-shaped dough with toppings, obtained by the known process of Example 3 (step 6) using gluten-free buckwheat flour.
**Figure 14** - Oven-baked dough obtained by the known process of Example 3 (step 7) using gluten-free buckwheat flour.
**Figures 15** and **16** - Finished product obtained by the known process of Example 3 (step 7) using gluten-free buckwheat flour.
**Figure 17** - Finished product resulting from the process of the invention inside a wrapper and suitable for deep-freezing.
**Figure 18** - Finished product resulting from the process of the invention submitted to deep-freezing and before being heated and consumed by a user.
**Figure 19** and **20** - *Gluten-free* baked products from two different main competitors submitted to deep-freezing and before being heated and consumed by a user.
**Figure 21** **-** Photo of a competitor's traditional or *with gluten* baked product submitted to deep-freezing and before being heated and consumed by a user.

### DETAILED DESCRIPTION OF THE INVENTION

Note that the water used in the production process is exclusively sulfur water comprising at least one sulfur derivative selected from hydrogen sulfide and sulfate.

Preferably, sulfur water does not undergo cooling; preferably, it is commercially available.

Preferably, the quantity of sulfur water is ≥ 43% by weight, preferably comprised between 45% and 95%, preferably between 50% and 95%, preferably between 60% and 95%, preferably between 70% and 95%, preferably between 75% and 95%, preferably between 80% and 95%, preferably between 83% and 95%, preferably between 85% and 95%, preferably between 87% and 95%, preferably between 89% and 95%, preferably between 89% and 93%, preferably is about 80%, 81%, 82%, 83%, 84%, 85%, 87%, 88%, 89%, 90% by weight of the flour weight (w/w). Note that high hydration makes the dough digestible for the consumer.

The level or percentage of hydration of the dough of the invention refers to the quantity of sulfur water in the total quantity of flour.

Preferably, the quantity of sulfur water is between 116 g and 199 g, preferably between 119 g and 182 g, preferably between 119 g and 150 g, preferably of 134 g.

Sulfur water preferably comprises both hydrogen sulfide and sulfate.

The quantity of the at least one sulfur derivative included in sulfur water is preferably between 10 mg and 80 mg, preferably between 12 mg and 75 mg, preferably between 14 mg and 60 mg, preferably of 14 mg or 60 mg per liter of sulfur water.

Preferably, when the at least one sulfur derivative is hydrogen sulfide, its quantity is preferably of 14 mg. Preferably, when the at least one sulfur derivative is equal to sulfate, its quantity is of 60 mg.

Sulfur water preferably comprises at least one inorganic substance selected from the group consisting of: free carbon dioxide, bicarbonate, calcium, magnesium, potassium and combinations thereof.

Preferably the quantity of the at least one inorganic substance is comprised between 10 and 4100 mg, preferably between 15 and 4085 mg, preferably between 20 and 4085 mg, is preferably of 20 mg, 85 mg, 480 mg, 1500 mg, 2000 mg, 4085 mg per liter of sulfur water.

Preferably, the at least one sulfur derivative and the at least one inorganic substance may be assimilated to mineral salts for the purposes of the invention.

The Applicant considers that since the water of the invention consists of sulfur water, the one or more inorganic substances, such as mineral salts, calcium and magnesium, comprised therein are in greater quantities than those present in a conventional dough, which is processed using normal, tap or distilled or non-sulfur water.

The presence of one or more inorganic substances, preferably mineral salts, calcium and magnesium, is crucial because they provide benefits for the final consumer. The presence of inorganic or sulfated substances, such as mineral salts, has the function of promoting a complete digestion of the final baked product and of generally benefiting the digestive system. At the same time, the presence of magnesium allows to promote the mental well-being through an anti-stress action; while calcium may be easily assimilated by the body, particularly in the intestines.

The use of sulfur water is also advantageous because of its benefits for the human body and food health; the Applicant has not pointed out any kind of inconvenience in connection with the use of sulfur water for the purposes of the finding, such as any peculiar colouring or smell of the mixture or of the final product which may be unpleasant for the consumer.

Preferably, the quantity of the ingredients provided in step (a), i.e. salt, oil and yeast, is comprised between 0.23 g and 17 g, preferably between 0.25 g and 15.25 g, yeast is preferably of 0.25 g, salt is preferably of 7 g, and oil is preferably of 8 g.

Gluten-free flour is preferably selected from: buckwheat, quinoa and amaranth, preferably it is buckwheat flour.

Gluten-free flour refers to a flour that is naturally gluten-free, preferably with a gluten content < 20 ppm.

Buckwheat *(Polygonaceae)* is a "pseudocereal" (like amaranth and quinoa), since it belongs to plants that are botanically different from the cereal grasses (wheat, rice, barley, rye, oats, maize). Technologically, buckwheat falls among the "worst" flours, due to its poor capacity to retain gas, and to make its starch scarcely available to yeasts, inhibiting rising. It contains: proteins (18% versus 12% in wheat; rich in all the essential amino acids, easily absorbed, making it a flour with a high protein value); negligible lipids; mineral salts present (zinc, magnesium). The Applicant considers buckwheat flour to be the one that allows to obtain a dough and final product closest in appearance, taste, and fragrance to those obtainable from a wheat flour with gluten.

Quinoa *(Amaranthaceae*) contains: carbohydrates (approx. 64%, consistent with the content of cereals); proteins (up to 14%, a quantity higher than the average of other cereals; gluten-free; all essential amino acids and many vitamins are present); lipids (approx. 6%, for traditional cereals 2-3%; therefore, the caloric intake is higher than that of other cereals; mineral salts (phosphorus, potassium, manganese).

Amaranth *(Amaranthaceae*) flour contains, per 100 g of product: energy value (Kcal) 321; proteins (g) 14.5; carbohydrates (g) 51; fats (g) 7.1; fibres (g) 15; iron (g) 7.61; calcium (mg) 159. It is not suitable for the production of risen food products; it is usually mixed with wheat (or other gluten-containing cereals).

Since rice flour does not have any wheat-like protein, as buckwheat, is not suitable for rising. Rice flour requires the use of other types of flours, thickeners and/or stabilisers. It contains: proteins (approximately 6-7%); carbohydrates (mainly starch, to a much greater extent than other cereals, which makes rice flour one of the flours with the highest caloric value); low in fat and minerals.

The step of adding the flour to the primary mixture (c) substantially occurs in a period of time comprised between 3 and 15 seconds, preferably between 5 and 10 seconds. Preferably, the step of adding the flour to the primary mixture (c) occurs by means of a kneading instrument; preferably, the processing speed of the kneading instrument is increased steadily during the above-mentioned preferred time frame. This means incorporating the flour slowly and gently. This advantageously promotes the formation of the dough bond, which would otherwise hardly be formed as the gluten mesh is absent; consequently, the step of gently and slowly adding flour to the primary mixture (c) ensures to obtain the above-mentioned characteristics of softness, elasticity and fluffiness of the gluten-free dough or, after baking the gluten-free dough, of the gluten-free product.

### Step of mixing the homogeneous secondary mixture to obtain an intermediate dough (e)

The step of mixing the homogeneous secondary mixture to obtain an intermediate dough (e) preferably occurs within a time period ≤ 20 minutes, preferably < 15 minutes, preferably between 12 and 13 minutes.

This step of mixing the homogeneous secondary mixture to obtain an intermediate dough (e) is important to promote the formation of alveolation and dough bond.

### Step of obtaining or forming balls from the spread out intermediate dough (f)

The step of obtaining balls from the spread out intermediate dough (f) preferably involves forming dough balls of dimensions ranging between 0.270 and 0.350 grams, preferably between 0.290 and 0.320 grams, preferably 0.310 grams (g).

A dough ball refers to a more or less spherical-shaped part of the dough, which is obtained after manually subdividing the spread out intermediate dough (or "staglio" step). The "staglio" step involves subdividing the spread out intermediate dough by forming or obtaining balls through manual intervention.

The step of obtaining balls (f) from the spread out intermediate dough, apart from practical matters, is preferably also for giving vigour and increase the volume of the spread out dough.

Preferably, the surface of each dough ball is evenly greased with oil to seal the dough ball.

The step of spreading out the intermediate dough on a flat surface and obtaining or forming balls from the spread out intermediate dough (f) is followed by a sub-step of storing and letting the balls rest (f1).

Said sub-step of storing and letting the balls rest (f1) preferably occurs within a time period comprised between 3 and 15 minutes, preferably between 5 and 10 minutes. Note that as the outside temperature decreases, it is necessary to increase the waiting period for said sub-step of storing and letting the dough balls rest (f1), still remaining within the above-mentioned time ranges. The sub-step of storing and letting the dough balls rest (f1) occurs at a temperature comprised between 2°C and 7°C. preferably between 2°C and 5°C, preferably in a refrigerator.

The Applicant considers that the timing, albeit relatively short, and the temperatures of the step of storing and letting the dough balls rest (f1) are functional to obtain a dough "thermal shock", prior to rising, necessary to stabilise the dough and any gases developed.

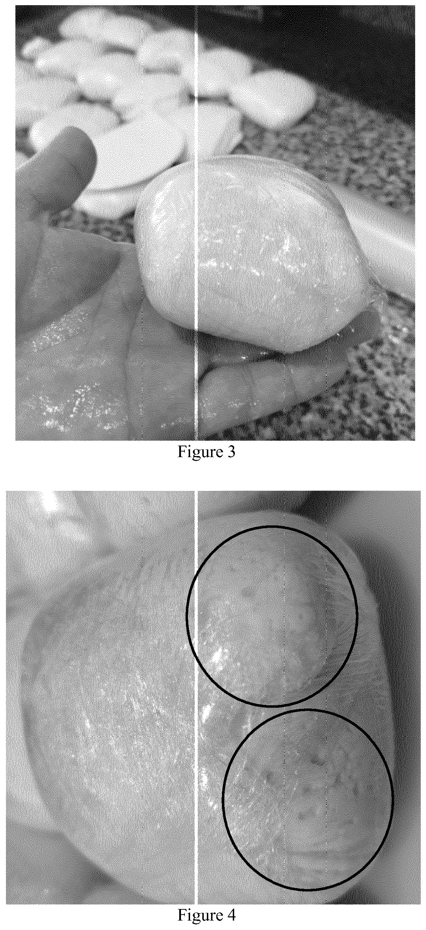

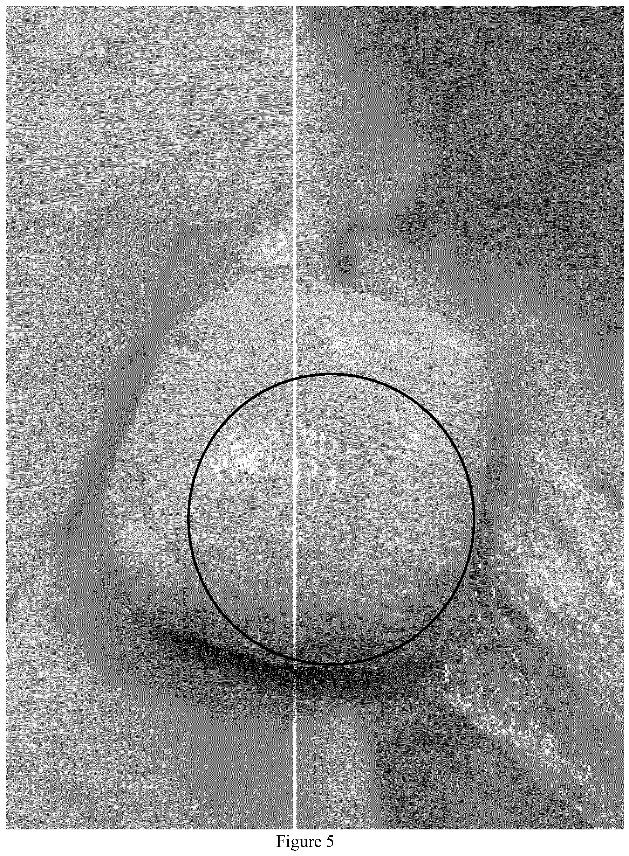

The step of storing and letting the dough balls rest (f1) occurs wrapping each single ball in films (or cellophane or wrappers) (Figures 3, 4, 5). Despite the relatively high level of hydration of the dough and the balls, it is possible, thanks to the sub-step of storing and letting the balls rest (f1), to process and spread out the dough of the invention easily and efficiently. The Applicant considers that wrapping the single dough ball in a film is advantageous as it allows air or gases, developed mainly from the sulfur water included in the dough of the invention, to be retained or trapped in the alveolations or internal meshes of the intermediate dough, preventing the intermediate dough from losing volume or "deflating". This sub-step of storing and letting the dough balls rest (f1) is functional for the effective rising of the intermediate dough, since the development and trapping of gases gives strength and impetus to the growth of the intermediate dough itself.

### Rising step (g)

The rising step (g) or "appretto" preferably takes a period of time ≤ 24 hours, preferably of 24 hours. Preferably, the rising step occurs in cold storage, at a temperature preferably comprised between 2°C and 6°C, preferably between 3°C and 4°C.

It should be noted that the process of the invention globally lasts less than the known processes.

### Gluten-free dough obtained by the process of the invention

The gluten-free dough may preferably be deep-frozen. The dough is preferably adapted to be deep-frozen.

Gluten-free dough refers to a dough without gluten.

Deep-freezing refers to a process that is preferably carried out at industrial level and that makes it possible to obtain products whose nutritional characteristics remain unchanged; the food or dough or food product undergo temperatures below -18°C that induce the formation of micro-crystals of water that do not damage the biological structure of the product. The organoleptic and nutritional properties (proteins, vitamins, carbohydrates, etc.), as well as the taste of the resulting product, remain unaltered compared to the original dough. Deep-frozen products are those found in the supermarket. The difference between the deep-freezing and freezing process is mainly based on temperature and processing time. The freezing process, on the other hand, is a process slower than deep-freezing: a product freezes when undergoing temperatures between 0°C and -15°C, with the formation of larger ice crystals. For example, we talk about frozen food for home-made dishes or products. Although freezing is an effective method for prolonging food preservation, it does not allow to block 100% the enzyme activity, resulting in the deterioration of the original quality of the product over time.

The gluten-free dough may be preferably consumed by people with and without food intolerances; preferably, both by celiac and non-celiac subjects.

A food intolerance (or disorder) refers to an adverse reaction of the body towards certain food articles. Unlike food allergies, this reaction does not depend on abnormal activation of the immune system with its antibodies; moreover, it is less severe, occurs gradually and is proportional to the quantity of the food ingested.

A celiac subject refers to a person suffering from celiac disease. Preferably, celiac disease is a permanent food intolerance to gluten, a complex of nitrogenous substances formed while mixing, with water, the flour of certain cereals, such as oats, wheat, emmer, kamut, barley, rye, spelt and triticale. A non-celiac subject refers to a subject who does not suffer from celiac disease.

Preferably, the gluten-free dough may be preferably baked (h) at a temperature of up to 450°C, preferably between 430°C and 450°C, preferably of 450°C, to obtain a gluten-free product. Preferably, the baking step (h) at a temperature between 380°C and 410°C to obtain the gluten-free product from the gluten-free dough takes < 3 minutes.

### Gluten-free product obtained from gluten-free dough and the gluten-free dough production process

The gluten-free product is obtained following the baking step (h) of the gluten-free dough obtained, in turn, from the production process according to the invention. Said gluten-free product, preferably baked, is suitable for consumption by subjects with food intolerances or even by subjects without food intolerances. Preferably, the gluten-free product is also suitable for consumption by subjects without food intolerance or by celiac and non-celiac subjects. The gluten-free product has characteristics of softness and fragrance that make it desirable for both.

A baked product refers to a product that is raised and then baked in an oven selected from the group consisting of: bread, focaccia, pizza, baked desserts (doughnuts etc.), preferably the baked product is pizza *(Ministerial Decree of 20 December 1994: Single list of ingredients. for ice cream, pastry, bakery and delicatessen products sold in bulk*).

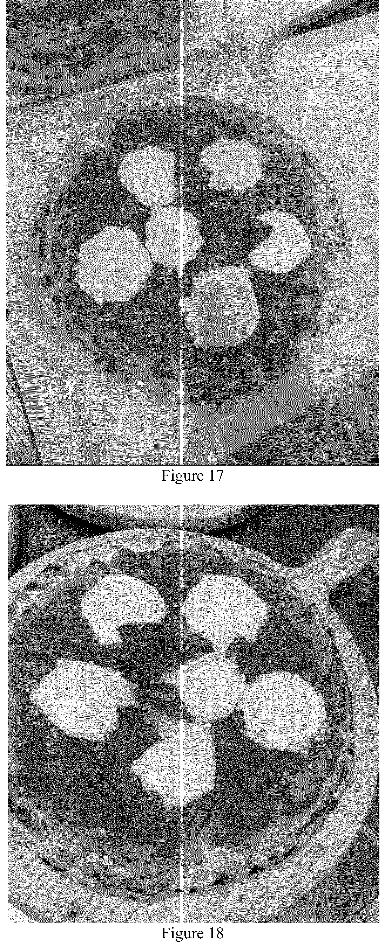

The gluten-free product is preferably suitable to undergo deep-freezing to obtain a deep-frozen product, preferably a deep-frozen baked product, preferably within containers or wrappers (Figures 17 and 18).

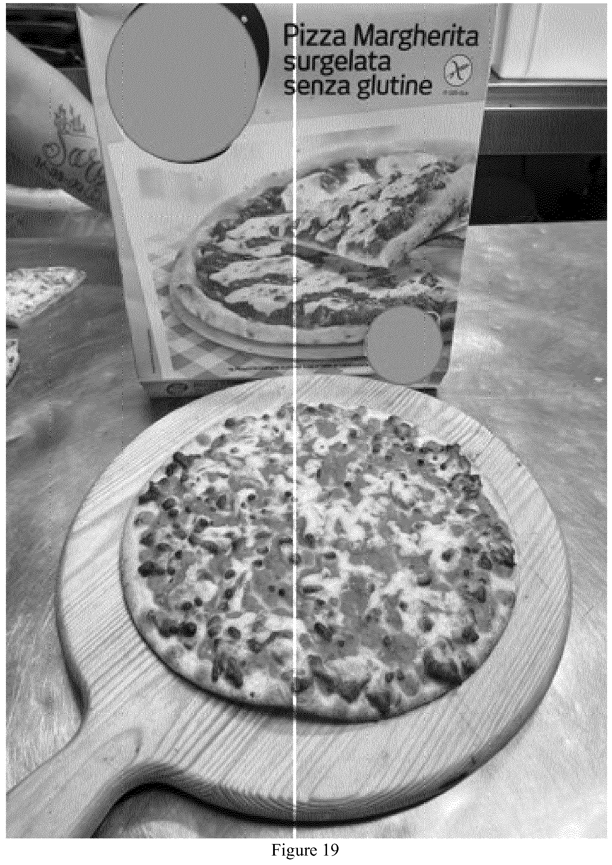

Preferably, the gluten-free product, preferably baked, preferably deep-frozen, is suitable for consumption by a user after undergoing heating to a temperature between 170°C and 250°C, preferably between 190°C and 200°C. Preferably, said step of heating to a temperature between 170°C and 250°C occurs in an oven, preferably preheated and non-ventilated, for a period of time ≤ 15 minutes, preferably ≤ 10 minutes. Although the finished product or gluten-free product is preferably a deep-frozen preparation or product, it retains the aforementioned characteristics of softness, colouring and fragrance when consumed by a user, which are comparable to a product obtained from a traditional dough or with gluten; in particular, the presence of sulfur water, and preferably the presence of the sulfites that have developed, gives a typical bronze colouring to the finished deep-frozen gluten-free product unlike the well-known commercial deep-frozen products, which usually have, as mentioned, a whitish colouring that is remarkably less attractive to the final consumer (Figures 19, 20 and 21).

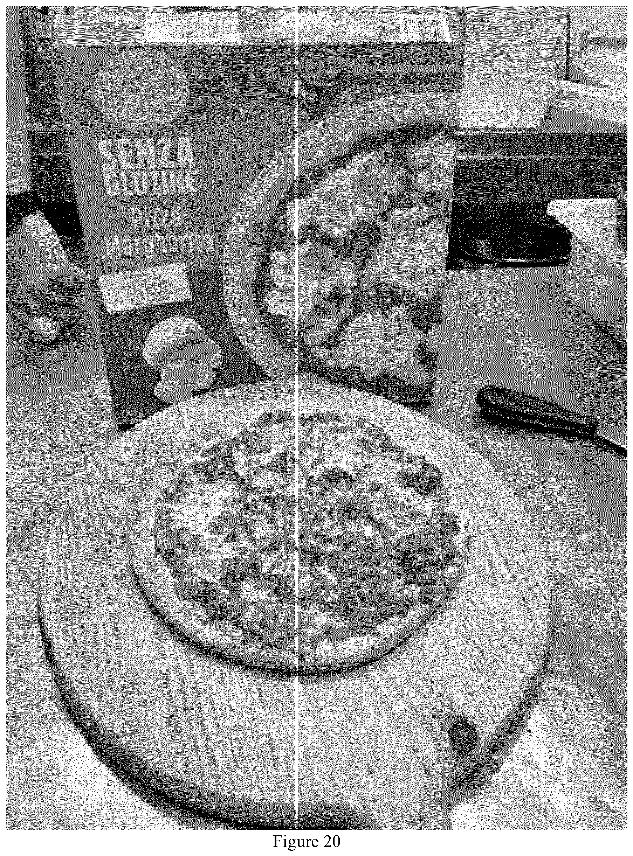

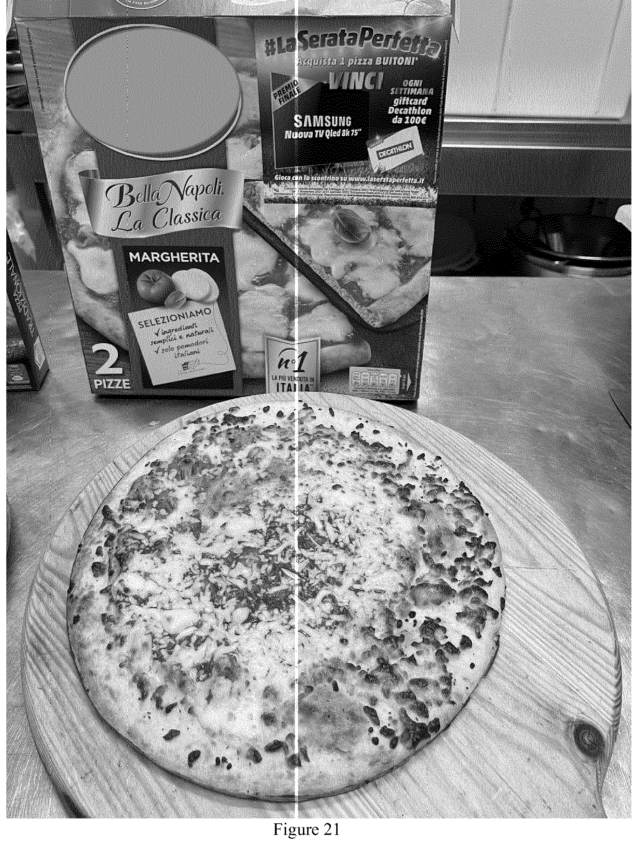

In particular, the Applicant points out that, despite the presence of gluten, the deep-frozen finished product in Figure 18 shows no significant visual difference to the gluten-free market products in Figures 19 and 20. Although gluten-free, the deep-frozen baked product, on the other hand, looks nicer than the commercial gluten-free products in Figures 19 and 20, but also nicer than the known product with gluten in Figure 21.

### EXAMPLES

Hereinafter, the Applicant provides embodiments of the invention for merely illustrative and non-limiting purposes.
***1. Example of gluten-free dough production process according to the invention***
- providing the following ingredients: water, flour, yeast, salt, oil,
- adding the yeast with water dissolving it in the planetary mixer,
- adding the flour gradually, allowing it to be gently absorbed with water,
- when a homogeneous mixture is visually achieved, adding salt and oil,
- mixing the resulting homogeneous mixture for 2-3 minutes,
- spreading out the resulting dough after mixing on a horizontal surface and start subdividing into balls (dough balls) of approximately 0.310 g,
- storing in suitable containers in a refrigerator at a temperature comprised between 2°C and 5°C,
- allow to rise for 24 hours to obtain the gluten-free dough.

***2. Example of gluten-free dough***

| **Ingredients** | **Quantity in grams (g)** |
|---|---|
| Gluten-free buckwheat flour | 162 |
| Salt | 7 |
| Oil | 8 |
| Sulfur water | 134 |
| Yeast | 0.250 |

***3. Comparative example with a traditional process***
Hereinafter, a known process (preferably, the one described in Patent Application HRP20200261A1) involving the use of thermal water and wheat flour *(with gluten*) is described. The Applicant intends to prove that, by following the known process using thermal water and buckwheat flour *(gluten-free*) of Example 2, it is not possible to obtain a dough and a product such as that obtainable by the process of the invention.

### Known process steps (preparation of a risen pizza dough with the addition of thermal water):

1) thermal water is collected in a container, preferably cooled for 24 hours in a special chamber chilled to 5°C;
2) 1 kg of flour, 1 g of dry yeast or 3 g of fresh yeast, 25 g of sourdough (home-grown or commercially available) are mixed in a bowl, with the gradual addition of 500 ml-700 ml of thermal water, pre-cooled to 4°C; stir for 15 minutes; then add 4% of salt to the total mass, and stirring again for 5-10 minutes;
3) the dough rests for 45 minutes at 22-24°C;
4) the dough is shaped into smaller balls, then placed in fermentation containers, where it matures for 3 hours at 22-24°C;
5) the dough is transferred to a cold chamber at 4-6°C, where it matures for 72-96 hours;
6) the dough is matured again for 2 hours at 22-24°C, then shaped (circle shape), then desired toppings are added;
7) the dough is baked in an oven for 90-110 seconds at 420-450°C to obtain the finished product.

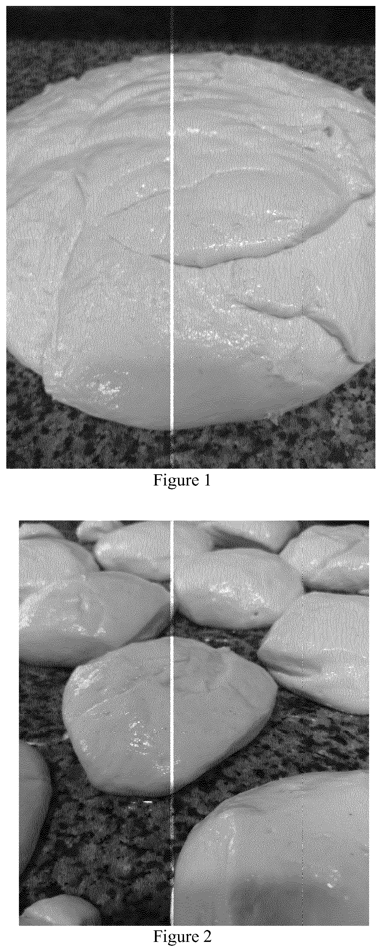

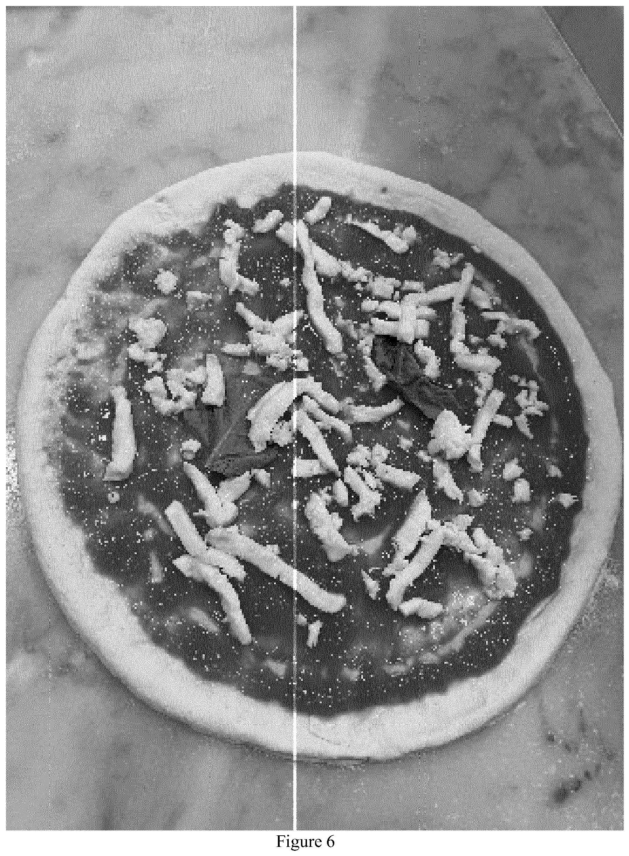

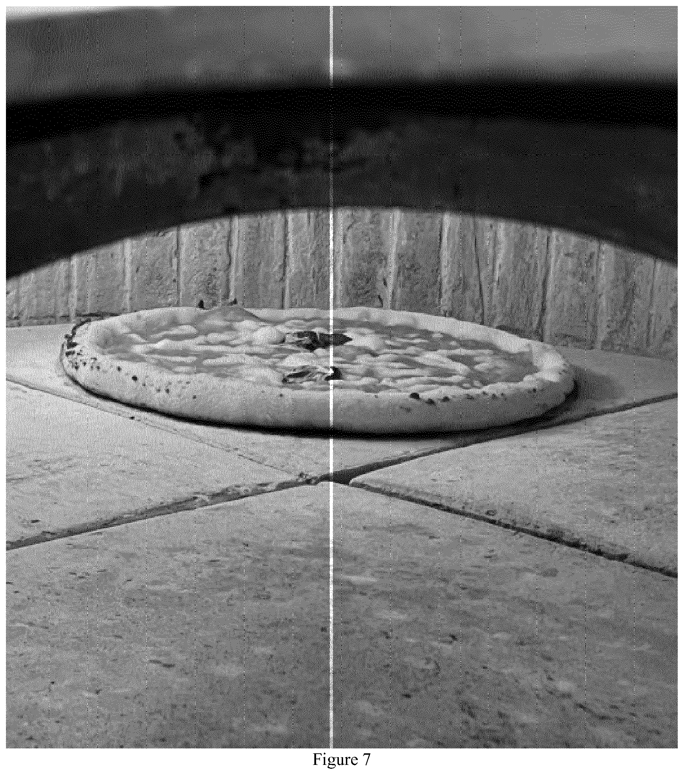

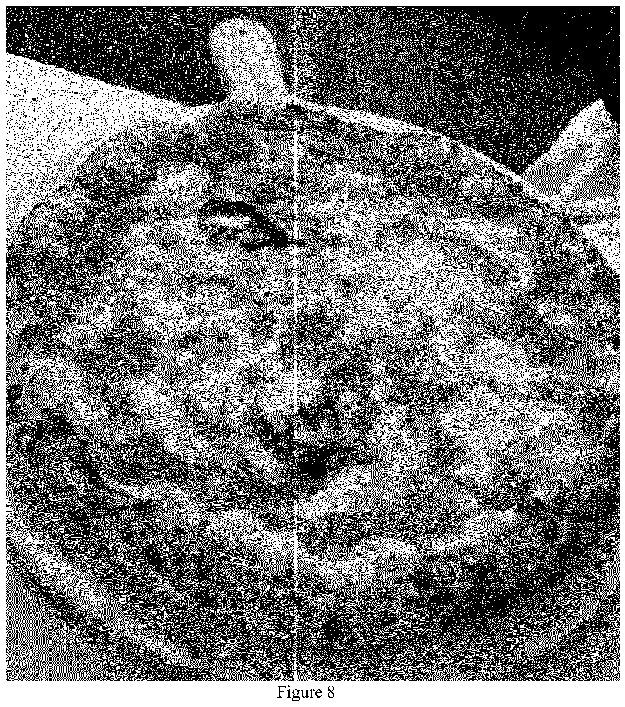

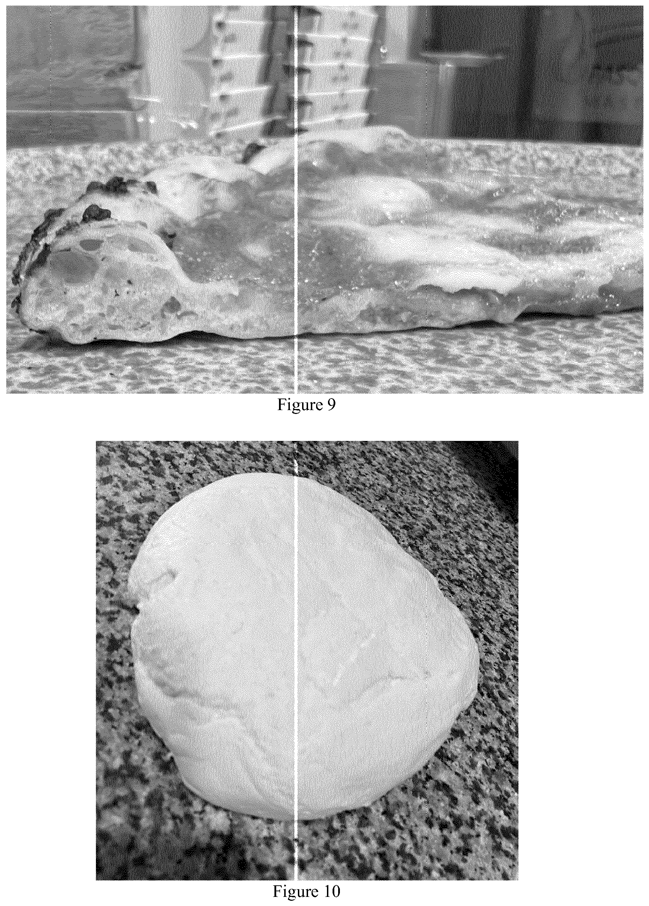

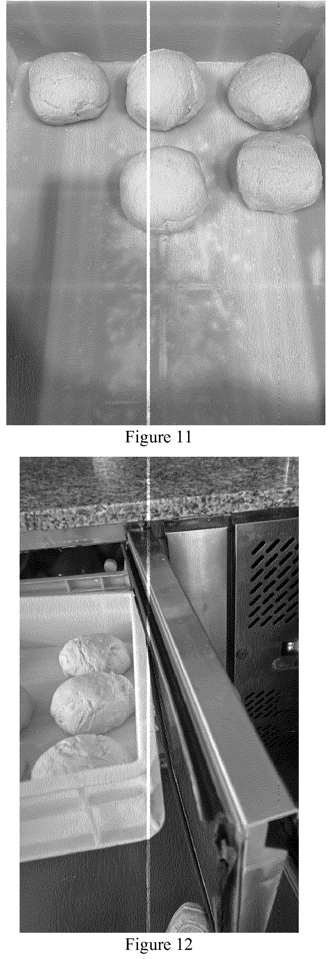

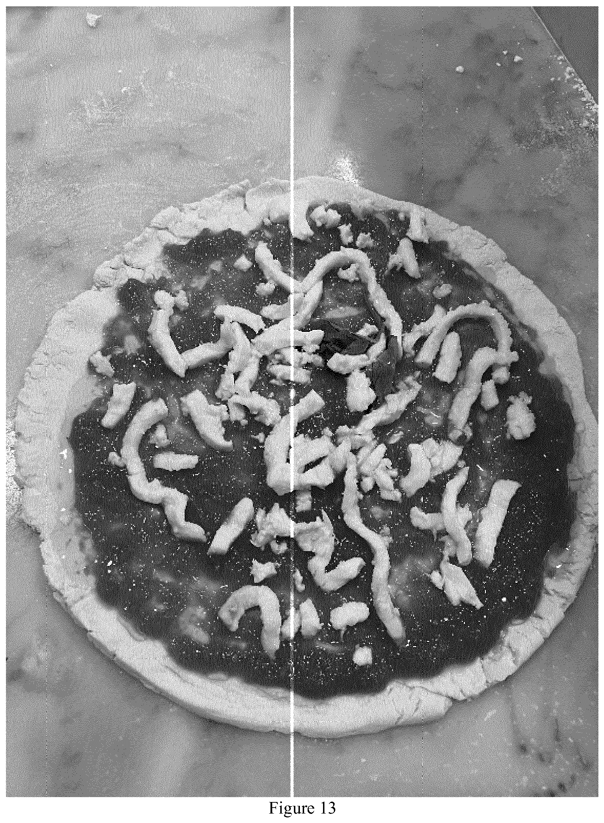

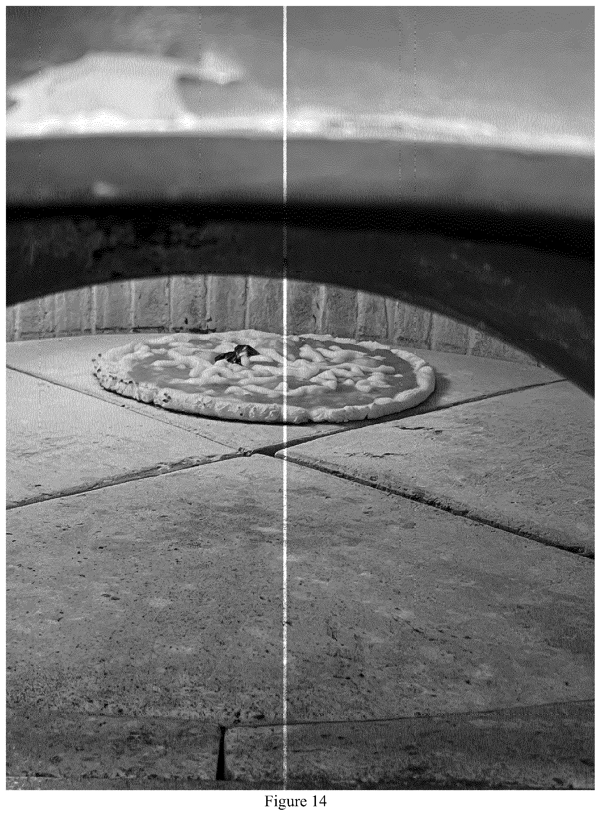

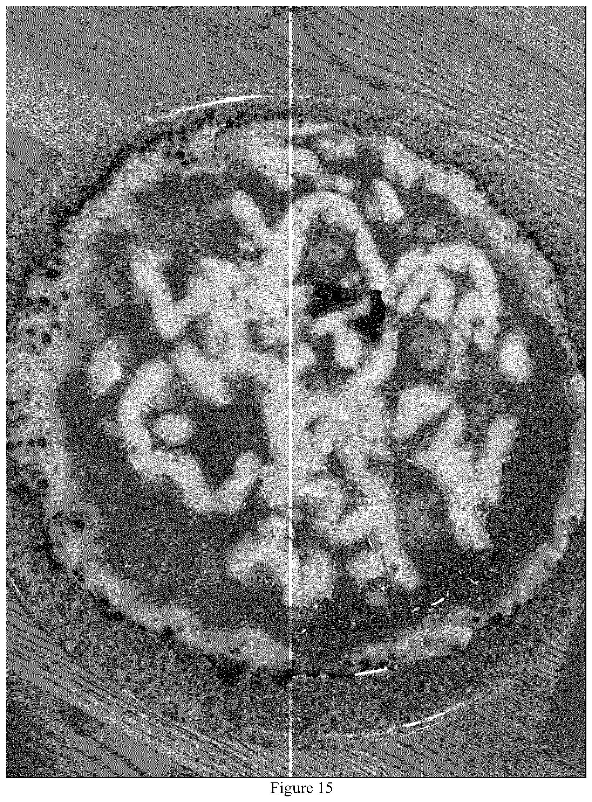

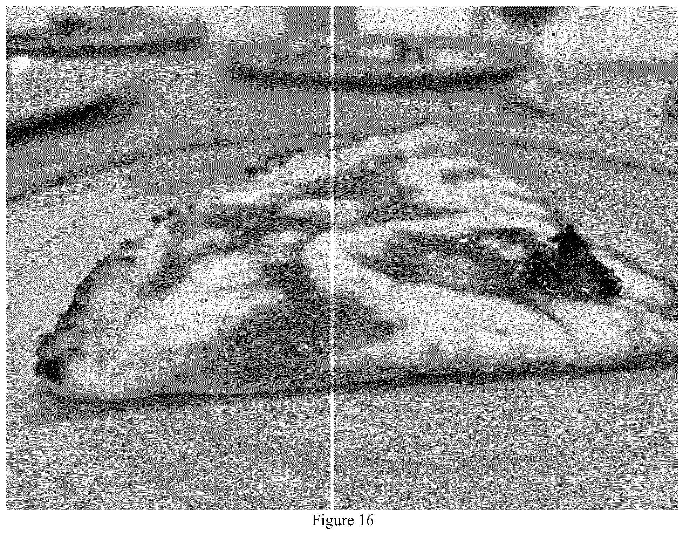

By comparing the Figures, it can be appreciated that, if compared to those obtained by the known process (Figures 10-16), the dough and product obtained by the process of the invention (Figures 1-9) show: better hydration (Figures 1 and 2 *vs.* Figures 10 and 11); better and easier dough processing and shaping (Figure 6 *vs.* Figure 13); better alveolation and dough growth (Figures 7-9 *vs*. Figures 14-16).

## Claims

1. A process of producing a gluten-free dough, comprising the following steps of:
a) providing the following ingredients: water, flour, yeast, salt, oil,
b) adding the yeast to the water and mix to obtain a primary mixture,
c) adding the flour to the primary mixture to obtain a homogeneous secondary mixture,
d) adding salt and oil to the homogeneous secondary mixture,
e) mixing the homogeneous secondary mixture from the previous step (d) to obtain an intermediate dough,
f) spreading out the intermediate dough on a flat surface, and forming dough balls from the spread intermediate dough,
g) let the balls rise,
**wherein**
the water consists of sulfur water, wherein the sulfur water comprises at least one sulfur derivative selected from hydrogen sulfide and sulfate,
the step of adding the flour to the primary mixture (c) occurs in a period of time comprised between 3 and 15 seconds, preferably between 5 and 10 seconds,
wherein the step of spreading out the intermediate dough on a surface and forming dough balls from the spread intermediate dough (f) is followed by a sub-step of storing and letting the dough balls rest (f1),
wherein the sub-step of storing and letting the dough balls rest (f1) occurs at a temperature comprised between 2°C and 7°C and wrapping each single ball in films.

2. Process as claimed in claim 1, wherein the quantity of the at least one sulfur derivative ranges from 10 mg to 80 mg per liter of sulfur water.

3. Process as claimed in any of claims from 1 to 2, wherein the flour is of the gluten-free type, preferably selected from: buckwheat, quinoa and amaranth.

4. Process as claimed in any of claims from 1 to 3, wherein the step of mixing the homogeneous secondary mixture to obtain an intermediate dough (e) occurs in a period of time ≤ 20 minutes.

5. Process as claimed in any of claims from 1 to 4, wherein the step of forming dough balls from the spread intermediate dough (f) results in the formation of balls, preferably of dimensions ranging from 0.270 to 0.350 g, preferably of 0.310 g.

6. Process as claimed in any of claims from 1 to 5, wherein the rising step (g) lasts ≤ 24 hours, preferably 24 hours.

## Patentansprüche

1. Verfahren zur Herstellung eines glutenfreien Teigs, umfassend die folgenden Schritte:
a) Bereitstellen der folgenden Zutaten: Wasser, Mehl, Hefe, Salz, Öl;
b) Zugeben der Hefe zu dem Wasser und Mischen, um eine primäre Mischung zu erhalten;
c) Zugeben des Mehls zu der primären Mischung, um eine homogene sekundäre Mischung zu erhalten;
d) Zugeben von Salz und Öl zu der homogenen sekundären Mischung;
e) Mischen der homogenen sekundären Mischung aus dem vorhergehenden Schritt (d), um einen Zwischenteig zu erhalten;
f) Ausbreiten des Zwischenteigs auf einer flachen Oberfläche und Formen von Teigkugeln aus dem ausgebreiteten Zwischenteig;
g) Gehenlassen der Kugeln;
**dadurch gekennzeichnet, dass**
das Wasser aus Schwefelwasser besteht, wobei das Schwefelwasser mindestens ein Schwefelderivat umfasst, das aus Schwefelwasserstoff und Sulfat ausgewählt ist;
der Schritt des Zugebens des Mehls zu der primären Mischung (c) in einem Zeitraum von 3 bis 15 Sekunden, vorzugsweise zwischen 5 und 10 Sekunden, erfolgt;
der Schritt des Ausbreitens des Zwischenteigs auf einer Oberfläche und des Formens von Teigkugeln aus dem ausgebreiteten Zwischenteig (f) von einem Teilschritt des Lagerns und Ruhenlassens der Teigkugeln (f1) gefolgt wird;
wobei der Teilschritt des Lagerns und Ruhenlassens der Teigkugeln (f1) bei einer Temperatur zwischen 2°C und 7°C erfolgt und jede einzelne Kugel in Folien eingewickelt wird.

2. Verfahren nach Anspruch 1, **dadurch gekennzeichnet, dass** die Menge des mindestens einen Schwefelderivats zwischen 10 mg und 80 mg pro Liter Schwefelwasser liegt.

3. Verfahren nach einem der Ansprüche 1 bis 2, **dadurch gekennzeichnet, dass** das Mehl vom glutenfreien Typ ist, vorzugsweise ausgewählt aus: Buchweizen, Quinoa und Amaranth.

4. Verfahren nach einem der Ansprüche 1 bis 3, **dadurch gekennzeichnet, dass** der Schritt des Mischens der homogenen sekundären Mischung zur Erzielung eines Zwischenteigs (e) in einem Zeitraum von ≤ 20 Minuten erfolgt.

5. Verfahren nach einem der Ansprüche 1 bis 4, **dadurch gekennzeichnet, dass** der Schritt des Formens von Teigkugeln aus dem ausgebreiteten Zwischenteig (f) zur Bildung von Kugeln führt, vorzugsweise mit Abmessungen im Bereich von 0,270 bis 0,350 g, vorzugsweise von 0,310 g.

6. Verfahren nach einem der Ansprüche 1 bis 5, **dadurch gekennzeichnet, dass** der Gehenlass-Schritt (g) ≤ 24 Stunden, vorzugsweise 24 Stunden, dauert.

## Revendications

1. Un procédé de production d'une pâte sans gluten, comprenant les étapes suivantes :
a) la fourniture des ingrédients suivants : eau, farine, levure, sel, huile ;
b) l'ajout de la levure à l'eau et le mélange pour obtenir un mélange primaire ;
c) l'ajout de la farine audit mélange primaire pour obtenir un mélange secondaire homogène ;
d) l'ajout de sel et d'huile audit mélange secondaire homogène ;
e) le mélange dudit mélange secondaire homogène de l'étape précédente (d) pour obtenir une pâte intermédiaire ;
f) l'étalement de ladite pâte intermédiaire sur une surface plane, et la formation de boules de pâte à partir de ladite pâte intermédiaire étalée ;
g) la levée desdites boules ;
**caractérisé en ce que**
l'eau consiste en eau sulfurée, ladite eau sulfurée comprenant au moins un dérivé sulfuré choisi parmi le sulfure d'hydrogène et le sulfate ;
l'étape d'ajout de la farine au mélange primaire (c) a lieu pendant une période de temps comprise entre 3 et 15 secondes, de préférence entre 5 et 10 secondes ;
l'étape d'étalement de la pâte intermédiaire sur une surface et de formation de boules de pâte à partir de ladite pâte intermédiaire étalée (f) est suivie d'une sous-étape de stockage et de repos des boules de pâte (f1) ;
ladite sous-étape de stockage et de repos des boules de pâte (f1) ayant lieu à une température comprise entre 2°C et 7°C et impliquant l'emballage de chaque boule individuelle dans des films.

2. Procédé selon la revendication 1, **caractérisé en ce que** la quantité dudit au moins un dérivé sulfuré est comprise entre 10 mg et 80 mg par litre d'eau sulfurée.

3. Procédé selon l'une quelconque des revendications 1 à 2, **caractérisé en ce que** la farine est de type sans gluten, de préférence choisie parmi : le sarrasin, le quinoa et l'amarante.

4. Procédé selon l'une quelconque des revendications 1 à 3, **caractérisé en ce que** l'étape de mélange du mélange secondaire homogène pour obtenir une pâte intermédiaire (e) a lieu pendant une période de temps ≤ 20 minutes.

5. Procédé selon l'une quelconque des revendications 1 à 4, **caractérisé en ce que** l'étape de formation de boules de pâte à partir de la pâte intermédiaire étalée (f) aboutit à la formation de boules, de préférence de dimensions comprises entre 0,270 et 0,350 g, de préférence de 0,310 g.

6. Procédé selon l'une quelconque des revendications 1 à 5, **caractérisé en ce que** l'étape de levée (g) dure ≤ 24 heures, de préférence 24 heures.
